(19) Europäisches Patentamt
European Patent Office
Office européen des brevets

(11) **EP 4 379 338 A1**

(12) **EUROPEAN PATENT APPLICATION**
published in accordance with Art. 153(4) EPC

(43) Date of publication:
**05.06.2024 Bulletin 2024/23**

(21) Application number: **22833031.2**

(22) Date of filing: **24.06.2022**

(51) International Patent Classification (IPC):
*G01L 9/04* (2006.01)     *G01L 1/22* (2006.01)

(52) Cooperative Patent Classification (CPC):
**G01L 9/04;** G01L 1/22

(86) International application number:
**PCT/JP2022/025323**

(87) International publication number:
**WO 2023/276884 (05.01.2023 Gazette 2023/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.06.2021 JP 2021106304**

(71) Applicant: NAGANO KEIKI CO., LTD.
**Tokyo 143-8544 (JP)**

(72) Inventors:
• **KODAMA Hiroshi**
**Tokyo 143-8544 (JP)**
• **TAKEDA Eiji**
**Tokyo 143-8544 (JP)**
• **YOSHIZAWA Takamitsu**
**Tokyo 143-8544 (JP)**

(74) Representative: **Page White Farrer**
**Bedford House**
**21a John Street**
**London WC1N 2BF (GB)**

(54) **SENSOR MODULE AND METHOD FOR MANUFACTURING SENSOR MODULE**

(57)    A sensor module (1) includes: a diaphragm (2) including a first region (211) and a second region (212) that includes a position at which a strain ε that occurs by an effect of a physical quantity caused by a measurement target fluid is zero and has a smaller effect of the physical quantity caused by the measurement target fluid than the first region (211); strain detecting elements (3) disposed in the first region (211); and an electric conductor (4) that is at least partially disposed in the second region (212) and electrically couples the strain detecting elements (3) to each other to configure a bridge circuit. The electric conductor (4) includes a resistance adjuster (43), at a position corresponding to the second region (212), that adjusts a resistance of the electric conductor (4).

FIG.4

EP 4 379 338 A1

**Description**

TECHNICAL FIELD

The present invention relates to a sensor module and a method of manufacturing a sensor module.

BACKGROUND ART

A dynamic quantity sensor including a strain-resistance element has been known (for example, Patent Literature 1).

In Patent Literature 1, a multilayer insulating layer is disposed on a surface of a metallic substrate to which a dynamic quantity is to be applied, and multiple strain-resistance elements are disposed on the multilayer insulating layer. The multiple strain-resistance elements are electrically coupled to each other by a conductor to configure a bridge circuit. Thus, it is possible to detect the dynamic quantity applied to the metallic substrate as a change in resistance of the strain-resistance elements.

In Patent Literature 1, some of the multiple strain-resistance elements are disposed in a dynamic-quantity-sensing part to which the dynamic quantity is to be applied, and the rest of strain-resistance elements are disposed in a dynamic-quantity-non-sensing part to which no dynamic quantity is to be applied. The strain-resistance elements disposed in the dynamic-quantity-non-sensing part are subjected to laser trimming to adjust resistances of the strain-resistance elements, which makes it possible to adjust he balance of the entire bridge circuit.

CITATION LIST

PATENT LITERATURE(S)

Patent Literature 1: JP H9-243472 A

SUMMARY OF THE INVENTION

PROBLEM(S) TO BE SOLVED BY THE INVENTION

In a dynamic quantity sensor disclosed in Patent Literature 1, it is necessary that some of strain-resistance elements are disposed in a dynamic-quantity-non-sensing part to which no dynamic quantity is to be applied, in order to adjust a balance of a bridge circuit. It is difficult to effectively use such strain detecting elements disposed in the dynamic-quantity-non-sensing part to detect the dynamic quantity, and thus it is not possible to obtain maximum detection accuracy by the disposed strain detecting elements.

An object of the invention is to provide a sensor module and a method of manufacturing a sensor module that make it possible to inhibit a decrease in detection accuracy and adjust a balance of a bridge circuit.

MEANS FOR SOLVING THE PROBLEM(S)

An aspect of the invention provides a sensor module, including: a diaphragm including a first region and a second region, the second region including a position at which a strain that occurs by an effect of a physical quantity caused by a measurement target fluid is zero and having a smaller effect of the physical quantity caused by the measurement target fluid than the first region; a plurality of strain detecting elements disposed in the first region; and an electric conductor that is at least partially disposed in the second region and electrically couples the plurality of strain detecting elements to each other to configure a bridge circuit, in which the electric conductor includes a resistance adjuster at a position corresponding to the second region, the resistance adjuster being configured to adjust a resistance of the electric conductor.

In the aspect of the invention, at least a portion of the electric conductor that electrically couples the plurality of strain detecting elements to each other is disposed in the second region having a smaller effect caused by the measurement target fluid than the first region where the strain detecting elements are disposed. Specifically, at least a portion of the electric conductor is disposed in the second region including the position at which the strain that occurs by the effect of the physical quantity caused by the measurement target fluid is zero. The electric conductor includes the resistance adjuster that adjusts the resistance of the electric conductor at the position corresponding to the second region. This makes it possible to effectively utilize all the strain detecting elements for the detection of the physical quantity, and adjust the resistance of the bridge circuit including the plurality of strain detecting elements and the electric conductor without affecting the detection accuracy of the physical quantity of the strain detecting elements. Therefore, a decrease in detection accuracy can be inhibited and the balance of the bridge circuit can be adjusted.

In the sensor module according to the aspect of the invention, the strain detecting elements and the electric conductor are preferably provided integrally, the strain detecting elements and the electric conductor preferably being provided to have a ring shape.

In such a configuration, the strain detecting elements and the electric conductor are provided integrally, which makes it possible to form the strain detecting elements and the electric conductor in one step in manufacturing the sensor module. It is therefore possible to simplify a process of manufacturing the sensor module.

In addition, the strain detecting elements and the electric conductor are provided to have the ring shape, which makes it possible to increase a length over which it is possible to dispose the electric conductor on the position where the strain that occurs by the effect of the physical quantity caused by the measurement target fluid is zero. It is therefore possible to increase an area in which the resistance adjuster is providable, which makes it possible increase an amount of resistance adjustment to be performed by the resistance adjuster.

In the sensor module according to the aspect of the invention, the effect of the strain caused by the measurement target fluid in the second region is preferably less than or equal to one tenth of the effect in the first region.

In such a configuration, the effect of the strain caused by the measurement target fluid in the second region in which the resistance adjuster is provided is less than or equal to one tenth of the effect in the first region in which the strain detecting elements are disposed. This makes it possible to dispose the resistance adjuster without affecting the detection accuracy of the physical quantity of the strain detecting elements. Therefore, a decrease in detection accuracy can be inhibited and the balance of the bridge circuit can be adjusted.

In the sensor module according to the aspect of the invention, the resistance adjuster preferably includes a groove provided at a position corresponding to the second region in the electric conductor.

In such a configuration, the resistance adjuster includes the groove, which makes it possible to adjust the balance of the bridge circuit with a simple configuration.

The sensor module according to the aspect of the invention preferably further includes an electrode including a first electrode and a second electrode, the first electrode being disposed on the diaphragm and formed from Au, the second electrode being stacked on the first electrode and formed from Au, in which the electric conductor preferably includes a coupling portion and an extended portion, the coupling portion electrically coupling the plurality of strain detecting elements to each other, the extended portion being extended from the coupling portion and electrically coupling the coupling portion and the first electrode to each other, and at least a portion of the first electrode is preferably stacked on the extended portion, and a diffusion portion is preferably provided at at least a portion in a depth direction of a location where the first electrode and the extended portion are stacked on each other, the diffusion portion having, in atomic percentage, greater than 60% of Au and greater than 10% of Cr.

In such a configuration, the first electrode of the electrode is stacked on the extended portion extended from the coupling portion of the electric conductor. The diffusion portion is provided at at least a portion in the depth direction of the location where the first electrode and the extended portion are stacked on each other. The diffusion portion has, in atomic percentage, greater than 60% of Au and greater than 10% of Cr. This makes it possible to stabilize the coupling between the electric conductor and the electrode. It is therefore possible to stabilize characteristics of a signal to be outputted through the electrode.

In the sensor module according to the aspect of the invention, a thickness of the first electrode is preferably greater than a thickness of the extended portion.

This configuration makes it possible to prevent the extended portion from being exposed at a stepped portion generated in the first electrode between a location stacked on the extended portion and a location not stacked on the extended portion.

In the sensor module according to the aspect of the invention, a thickness of the second electrode is preferably greater than a thickness of the extended portion.

This configuration makes it possible to decrease the thickness of the first electrode, which makes it possible to decrease a material for the first electrode.

The sensor module according to the aspect of the invention preferably further includes an electrode including a third electrode, the third electrode being disposed on the diaphragm and formed from Au, in which the electric conductor preferably includes a coupling portion and an extended portion, the coupling portion electrically coupling the plurality of strain detecting elements to each other, the extended portion being extended from the coupling portion and electrically coupling the coupling portion and the third electrode to each other, at least a portion of the third electrode is preferably stacked on the extended portion, and a diffusion portion is preferably provided at at least a portion in a depth direction of a location where the third electrode and the extended portion are stacked on each other, the diffusion portion having, in atomic percentage, greater than 60% of Au and greater than 10% of Cr.

In such a configuration, the third electrode of the electrode is stacked on the extended portion extended from the coupling portion of the electric conductor. The diffusion portion is provided at at least a portion in the depth direction of the location where the third electrode and the extended portion are stacked on each other. The diffusion portion has, in atomic percentage, greater than 60% of Au and greater than 10% of Cr. This makes it possible to stabilize the coupling between the electric conductor and the electrode. It is therefore possible to stabilize characteristics of a signal to be outputted through the electrode.

In the sensor module according to the aspect of the invention, a thickness of the third electrode is preferably greater than a thickness of the extended portion.

This configuration makes it possible to prevent the extended portion from being exposed at a stepped portion generated in the third electrode between a location stacked on the extended portion and a location not stacked on the extended portion.

The sensor module according to the aspect of the invention preferably further includes a protection film stacked on a portion of the electrode in a state where a portion of the electrode is exposed, in which a location, in the electrode, that is exposed without being covered with the protection film preferably includes an electrode pad, and the extended portion and the electrode pad are preferably separated from each other in a plan view.

In such a configuration, the electrode pad and the extended portion are separated from each other, which makes it possible to reduce an effect of the diffusion portion on the electrode pad. It is therefore possible to reliably couple the electrode pad and a wiring or the like to each other.

In the sensor module according to the aspect of the invention, the diaphragm preferably includes a diaphragm body on which the physical quantity caused by the measurement target fluid acts and an insulating layer stacked on the diaphragm body, and the diaphragm body is preferably formed from precipitation hardening stainless steel having a Rockwell hardness of greater than or equal to 35.

In such a configuration, the diaphragm body is formed from precipitation hardening stainless steel having a Rockwell hardness of greater than or equal to 35, which makes it possible to improve physical and chemical properties of the diaphragm body.

In the sensor module according to the aspect of the invention, the resistance adjuster preferably includes a plurality of resistance adjusters, and the electric conductor preferably includes the plurality of resistance adjusters and a bypass, the bypass causing at least one of the plurality of resistance adjusters to be electrically bypassed by coupling a primary side and a secondary side of the at least one resistance adjuster to each other.

In such a configuration, the primary side and the secondary side, in terms of a direction of an electric current, of at least one of the plurality of resistance adjusters are coupled to each other, thereby providing the bypass that causes the at least one resistance adjuster to be electrically bypassed. This makes it possible to adjust the resistance of the bridge circuit by electrically decoupling the bypass. It is therefore possible to facilitate the adjustment of the resistance of the bridge circuit.

Another aspect of the invention provides a method of manufacturing a sensor module, the sensor module including: a diaphragm including a first region and a second region, the second region including a position at which a strain that occurs by an effect of a physical quantity caused by a measurement target fluid is zero and having a smaller effect of the physical quantity caused by the measurement target fluid than the first region; a plurality of strain detecting elements disposed in the first region; and an electric conductor that is at least partially disposed in the second region and electrically couples the plurality of strain detecting elements to each other to configure a bridge circuit, the method including providing, while measuring a resistance balance of the bridge circuit, a resistance adjuster at a position corresponding to the second region in the electric conductor, the resistance adjuster being configured to adjust a resistance of the electric conductor.

Advantages similar to those described above are achievable in the another aspect of the invention.

Further, in such a configuration, the resistance adjuster configured to adjust the resistance of the electric conductor is provided while the resistance balance of the bridge circuit is measured, which makes it possible to reliably adjust the balance of the bridge circuit.

In the method of manufacturing the sensor module according to the another aspect of the invention, the providing of the resistance adjuster at the position corresponding to the second region in the electric conductor preferably includes forming a groove by laser trimming at a position corresponding to the second region in the electric conductor.

In such a configuration, in providing the resistance adjuster at the position corresponding to the second region in the electric conductor, the groove is formed by the laser trimming, which makes it possible to easily adjust the balance of the bridge circuit.

Still another aspect of the invention provides a method of manufacturing a sensor module, the sensor module including: a diaphragm including a first region and a second region, the second region including a position at which a strain that occurs by an effect of a physical quantity caused by a measurement target fluid is zero and having a smaller effect of the physical quantity caused by the measurement target fluid than the first region; a plurality of strain detecting elements disposed in the first region; and an electric conductor that is at least partially disposed in the second region and electrically couples the plurality of strain detecting elements to each other to configure a bridge circuit, the method including: providing a plurality of resistance adjusters at respective positions corresponding to the second region in the electric conductor, the plurality of resistance adjusters being configured to adjust a resistance of the electric conductor;

forming a bypass that causes each of the resistance adjusters to be electrically bypassed by coupling a primary side and a secondary side of the each of the resistance adjusters to each other; and adjusting a resistance of the electric conductor by electrically decoupling at least one of the bypasses.

Advantages similar to those described above are achievable in the still another aspect of the invention.

Further, in such a configuration, the resistance of the electric conductor is adjusted by electrically decoupling at least one of the bypasses, which makes it possible to facilitate the adjustment of the resistance of the bridge circuit.

The method of manufacturing the sensor module according to the still another aspect of the invention preferably further includes: stacking a first electrode on an extended portion extended from a coupling portion of the electric conductor; subjecting a location where the first electrode is stacked on the extended portion to a heat treatment; and stacking a second electrode on the first electrode.

In such a configuration, the location where the first electrode is stacked on the extended portion is subjected to the heat treatment, following which the second electrode is stacked on the first electrode. This makes it possible to reduce an effect of the heat treatment on the second electrode.

## BRIEF DESCRIPTION OF THE DRAWINGS

Fig. 1 is a plan view of an outline of a sensor module according to a first exemplary embodiment of the invention.
Fig. 2 is an enlarged plan view of a main part of the sensor module of the first exemplary embodiment.
Fig. 3 is a cross-sectional view of a coupled state between an electric conductor and an electrode of the first exemplary embodiment.
Fig. 4 illustrates displacement of a diaphragm of the first exemplary embodiment.
Fig. 5 is a cross-sectional view of a coupled state between an electric conductor and an electrode of a second exemplary embodiment.
Fig. 6 is a cross-sectional view of a coupled state between an electric conductor and an electrode of a third exemplary embodiment.
Fig. 7 is a plan view of an outline of a sensor module of a fourth exemplary embodiment.
Fig. 8 illustrates a bridge circuit adjusting step of the fourth exemplary embodiment.
Fig. 9 illustrates the bridge circuit adjusting step of the fourth exemplary embodiment.
Fig. 10 is a circuit diagram illustrating a bridge circuit of the sensor module of the fourth exemplary embodiment.
Fig. 11 illustrates the bridge circuit adjusting step of the fourth exemplary embodiment.
Fig. 12 illustrates the bridge circuit adjusting step of the fourth exemplary embodiment.
Fig. 13 illustrates the bridge circuit adjusting step of the fourth exemplary embodiment.
Fig. 14 illustrates the bridge circuit adjusting step of the fourth exemplary embodiment.

## DESCRIPTION OF EMBODIMENT(S)

First Exemplary Embodiment

A first exemplary embodiment of the invention will be described with reference to the drawings.

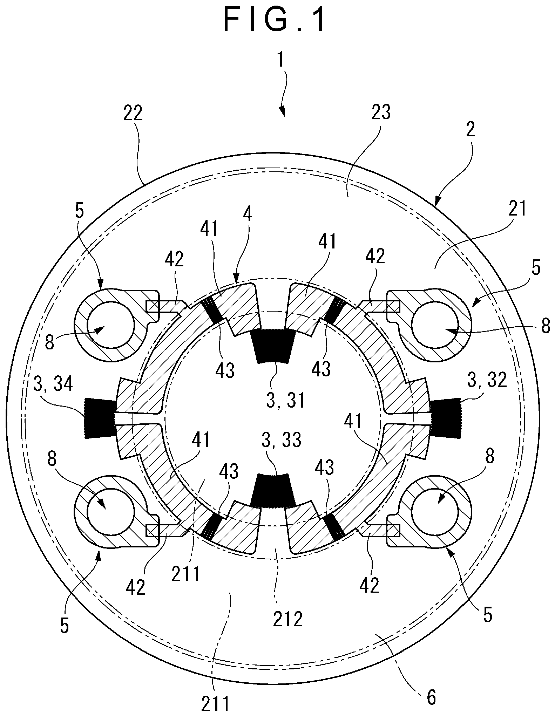

Fig. 1 is a front view of an outline of a sensor module 1 of the first exemplary embodiment. The sensor module 1 of the exemplary embodiment is configured to detect a pressure of a measurement target fluid.

As illustrated in Fig. 1, the sensor module 1 includes a diaphragm 2, a strain detecting element 3, an electric conductor 4, an electrode 5, and a protection film 6.

Diaphragm 2

The diaphragm 2 is a member that is displaced under pressure from the measurement target fluid. In the exemplary embodiment, the diaphragm 2 includes a diaphragm body 21, a cylindrical portion 22, and an insulating layer 23.

The diaphragm body 21 has a circular shape in a plan view. In the exemplary embodiment, the diaphragm body 21 is provided integrally with the cylindrical portion 22, and is formed from precipitation hardening stainless steel having a Rockwell hardness of greater than or equal to 35 and having high physical and chemical durability. It is therefore possible to enhance physical and chemical properties of the diaphragm body 21.

Further, in the exemplary embodiment, the diaphragm body 21 includes a first region 211 indicated by a two-dot chain line in Fig. 1, and a second region 212 having a smaller effect of a physical quantity caused by the measurement target fluid than the first region 211. Specifically, in a plan view, a circular area of a center portion of the diaphragm body 21 serves as the first region 211, and an annular area around the first region 211 serves as the second region 212. In addition, an annular area around the second region 212 serves as the first region 211. That is, the diaphragm body 21 includes the first region 211, the second region 212, and the first region 211 from the center portion toward a peripheral portion. Details of the first and second regions 211 and 212 will be described later.

The cylindrical portion 22 is a member having a cylindrical shape. The measurement target fluid is to be introduced on an inner circumference side of the cylindrical portion 22. In the exemplary embodiment, as described above, the cylindrical portion 22 is provided integrally with the diaphragm body 21, and formed from precipitation hardening stainless steel having a Rockwell hardness of greater than or equal to 35 and having high physical and chemical durability. More specifically, the diaphragm body 21 is provided at one end of the cylindrical portion 22. The measurement target fluid is thus introduced from another end of the cylindrical portion 22 and comes into contact with the diaphragm body 21 provided at the one end of the cylindrical portion 22.

The insulating layer 23 is stacked on a surface of the diaphragm body 21, i.e., on the surface, of the diaphragm body 21, opposite to the surface that is in contact with the measurement target fluid. In the exemplary embodiment, the insulating layer 23 is formed from, for example, an insulating member such as a silicon oxide film or a silicon nitride film. The insulating layer 23 insulates conduction between the diaphragm body 21 and the strain detecting element 3.

Strain Detecting Element 3

The strain detecting element 3 is an element that detects a strain corresponding to displacement of the diaphragm body 21. In the exemplary embodiment, the strain detecting element 3 is provided integrally with the electric conductor 4, and formed from a thin film alloy represented by the following formula: $Cr_{100-x-y}Al_xB_y$ (where x and y each represent an atomic percentage, and satisfy $2 < x < 10$ and $1 \leq y \leq 10$). Note that the strain detecting element 3 and the electric conductor 4 may be formed, for example, by vapor deposition, sputtering, and pattern printing.

Further, in the exemplary embodiment, the strain detecting element 3 includes a first strain detecting element 31, a second strain detecting element 32, a third strain detecting element 33, and a fourth strain detecting element 34.

In the exemplary embodiment, in a plan view, the first strain detecting element 31 is disposed in a 12 o'clock direction, the second strain detecting element 32 is disposed in a 3 o'clock direction, the third strain detecting element 33 is disposed in a 6 o'clock direction, and the fourth strain detecting element 34 is disposed in a 9 o'clock direction. That is, the first strain detecting element 31 and the third strain detecting element 33 are disposed at respective positions opposed to each other, and the second strain detecting element 32 and the fourth strain detecting element 34 are disposed at respective positions opposed to each other.

In the exemplary embodiment, the first strain detecting element 31 and the third strain detecting element 33 are each disposed in the first region 211 located inside the second region 212 in the diaphragm body 21. The second strain detecting element 32 and the fourth strain detecting element 34 are each disposed in the first region 211 located outside the second region 212 in the diaphragm body 21. The first strain detecting element 31, the second strain detecting element 32, the third strain detecting element 33, and the fourth strain detecting element 34 are electrically coupled to each other by the electric conductor 4.

Electric Conductor 4

As described above, the electric conductor 4 is provided integrally with the strain detecting elements 3 and electrically couples the strain detecting elements 3 to each other. Specifically, the electric conductor 4 is formed from a thin film alloy represented by the following formula: $Cr_{100-x-y}Al_xB_y$ (where x and y each represent an atomic percentage, and satisfy $2 < x < 10$ and $1 \leq y \leq 10$). In the exemplary embodiment, the strain detecting elements 3 and the electric conductor 4 are formed into a ring shape.

Further, in the exemplary embodiment, the electric conductor 4 includes a coupling portion 41 and an extended portion 42.

The coupling portion 41 is a member disposed between the strain detecting elements 3 and electrically couples the strain detecting elements 3 to each other. Specifically, the respective coupling portions 41 are disposed between the first strain detecting element 31 and the second strain detecting element 32, between the second strain detecting element 32 and the third strain detecting element 33, between the third strain detecting element 33 and the fourth strain detecting element 34, and between the fourth strain detecting element 34 and the first strain detecting element 31. The strain detecting elements 3 and the coupling portions 41 thus configure a bridge circuit.

In the exemplary embodiment, a resistance adjuster 43 is provided at a position corresponding to the second region 212 in each of the coupling portions 41 disposed between the first strain detecting element 31 and the second strain detecting element 32, between the second strain detecting element 32 and the third strain detecting element 33, between the third strain detecting element 33 and the fourth strain detecting element 34, and between the fourth strain detecting element 34 and the first strain detecting element 31.

More specifically, in the coupling portion 41 disposed between the first strain detecting element 31 and the second strain detecting element 32, one resistance adjuster 43 is provided between the first strain detecting element 31 and the extended portion 42 or between the extended portion 42 and the second strain detecting element 32.

Similarly, in the coupling portion 41 disposed between the second strain detecting element 32 and the third strain detecting element 33, one resistance adjuster 43 is provided between the second strain detecting element 32 and the extended portion 42 or between the extended portion 42 and the third strain detecting element 33.

Similarly, in the coupling portion 41 disposed between the third strain detecting element 33 and the fourth strain detecting element 34, one resistance adjuster 43 is provided between the third strain detecting element 33 and the extended portion 42 or between the extended portion 42 and the fourth strain detecting element 34.

Similarly, in the coupling portion 41 disposed between the fourth strain detecting element 34 and the first strain detecting element 31, one resistance adjuster 43 is provided between the fourth strain detecting element 34 and the extended portion 42 or between the extended portion 42 and the first strain detecting element 31.

In the exemplary embodiment, as described above, the resistance adjuster 43 is provided at each of four locations at a maximum out of eight locations. The eight locations are on both sides of the extended portions 42 in the coupling portions 41.

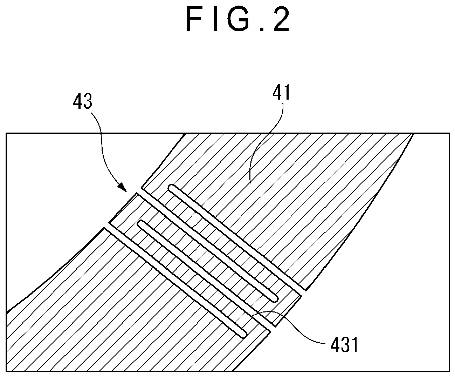

Fig. 2 is an enlarged plan view of a main part of the sensor module 1.

As illustrated in Fig. 2, the resistance adjuster 43 includes a groove 431 provided at a position corresponding to the second region 212 in the coupling portion 41 of the electric conductor 4. In the exemplary embodiment, four grooves 431 are provided alternately with respect to a direction intersecting with a direction in which the coupling portion 41 extends. This changes an area through which electric current flows in the coupling portion 41, which causes a resistance of the coupling portion 41 to be adjusted.

Note that the resistance adjuster 43 is not limited to the above-described configuration, and may include, for example, a single groove or five or more grooves. In addition, the multiple grooves may not be provided alternately.

A method of adjusting the resistance by the resistance adjuster 43 will be described later.

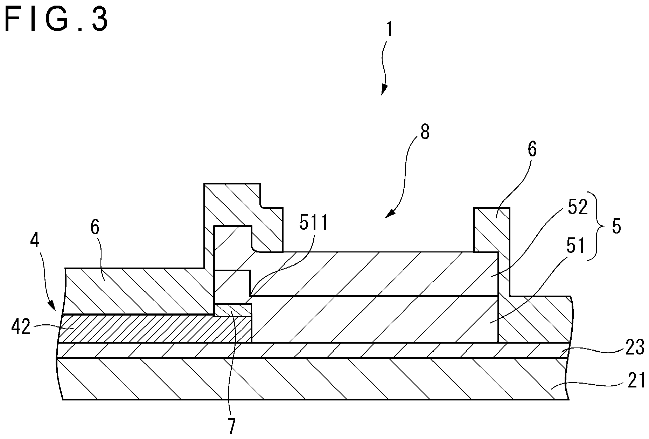

Fig. 3 is a cross-sectional view of a coupled state between the electric conductor 4 and the electrode 5.

As illustrated in Figs. 1 and 3, the extended portion 42 is extended from the coupling portion 41 toward the electrode 5, and electrically couples the coupling portion 41 and the electrode 5 to each other. In the exemplary embodiment, four extended portions 42 are provided toward the respective four electrodes 5. Details of the extended portion 42 and the electrode 5 will be described later.

Electrode 5

The electrode 5, what is called a terminal, outputs a signal detected by the strain detecting element 3 to a circuit board or the like provided outside the sensor module 1. In the exemplary embodiment, the electrode 5 is formed from Au.

Further, in the exemplary embodiment, the electrode 5 includes a first electrode 51 and a second electrode 52, as illustrated in Fig. 3.

The first electrode 51 is disposed on the insulating layer 23 of the diaphragm 2. The second electrode 52 is stacked on the first electrode 51.

In the exemplary embodiment, an end of the first electrode 51 is partially stacked on the extended portion 42 of the electric conductor 4. In the exemplary embodiment, as will be described later, the first electrode 51 and the extended portion 42 are coupled to each other by a heat treatment. Thus, a diffusion portion 7 is provided at at least a portion in a depth direction of a location where the first electrode 51 and the extended portion 42 are stacked on each other, with the first electrode 51 and the extended portion 42 being fused with each other.

In the exemplary embodiment, the diffusion portion 7 is formed as an alloy of Au and Cr, Au being a main component of the first electrode 51, Cr being a main component of the extended portion 42. Specifically, the diffusion portion 7 has, in atomic percentage, greater than 60% of Au and greater than 10% of Cr. This makes it possible to stabilize the coupling between the extended portion 42 and the first electrode 51. It is therefore possible to stabilize characteristics of a signal to be outputted through the electrode 5.

Further, in the exemplary embodiment, the first electrode 51 is configured to have a thickness larger than that of the extended portion 42, as illustrated in Fig. 3.

Assuming that the thickness of the extended portion 42 is larger than the thickness of the first electrode 51, the extended portion 42 may be exposed at a stepped portion 511 generated in the first electrode 51 between a location stacked on the extended portion 42 and a location not stacked on the extended portion 42.

In contrast, in the exemplary embodiment, the thickness of the first electrode 51 is larger than the thickness of the extended portion 42, preventing the extended portion 42 from being exposed at the stepped portion 511.

Protection Film 6

The protection film 6 is stacked in a circular shape to cover substantially the entire surface of the diaphragm 2 except for a portion of the electrode 5. In Fig. 1, the protection film 6 is illustrated as an area surrounded by a one-dot chain line.

In the exemplary embodiment, the protection film 6 is formed, for example, from an insulating member such as a silicon oxide film or a silicon nitride film. This makes it possible to reduce an effect on surface electric charge of the strain detecting element 3 due to ionic contamination or the like. In other words, it is possible to inhibit deterioration in detection accuracy that may otherwise be caused by a change in voltage between the strain detecting elements 3 due to the ionic contamination, etc.

Note that the protection film 6 is not limited to the above-described configuration, and may be formed, for example, from an insulating resin. Further, the protection film 6 is not limited to being stacked in a circular shape to cover substantially the entire surface of the diaphragm 2 except for a portion of the electrode 5, and may be formed in a band shape to cover each of the strain detecting elements 3, for example.

In the exemplary embodiment, a location in the electrode 5 that is exposed without being covered with the protection film 6 serves as an electrode pad 8. As illustrated in Fig. 3, the electrode pad 8 and the extended portion 42 are separated from each other in a cross-sectional view. This makes it possible to reduce an effect of the diffusion portion 7 on the electrode pad 8. It is therefore possible to reliably couple the electrode pad 8 and a wiring or the like to each other.

Method of Manufacturing Sensor Module 1

Next, a method of manufacturing the sensor module 1 will be described.

The method of manufacturing the sensor module 1 of the exemplary embodiment includes an insulating layer forming step, a pattern forming step, a first electrode stacking step, a heat-treatment step, a second electrode stacking step, a bridge circuit adjusting step, and a protection film stacking step.

Insulating Layer Forming Step

First, a film such as a silicon oxide film or a silicon nitride film is formed on a surface of the diaphragm body 21 formed from precipitation hardening stainless steel having a Rockwell hardness of greater than or equal to 35 to thereby form the insulating layer 23.

In the insulating layer forming step, the surface of the diaphragm body 21 may be coated with insulating glass, etc.

Pattern Forming Step

Next, a pattern of a thin film alloy represented by the following formula: Cr100-x-yAlxBy (where x and y each represent an atomic percentage, and satisfy $2 < x < 10$ and $1 \leq y \leq 10$) is formed on a surface of the insulating layer 23 formed in the insulating layer stacking step to thereby form the strain detecting element 3 and the electric conductor 4.

First Electrode Stacking Step

Next, the first electrode 51 formed from Au is stacked on an end of the extended portion 42 of the electric conductor 4 formed in the pattern printing step. On this occasion, the first electrode 51 is formed so that the end of the first electrode 51 is partially stacked on the end of the extended portion 42.

Heat Treatment Step

Next, a location where the first electrode 51 is stacked on the end of the extended portion 42 is subjected to the heat treatment. This causes at least a portion in the depth direction of the location where the first electrode 51 and the extended portion 42 are stacked on each other to be fused, thus forming the diffusion portion 7. On this occasion, the diffusion portion 7 is formed to have, in atomic percentage, greater than 60% of Au and greater than 10% of Cr.

Second Electrode Stacking Step

After the location where the first electrode 51 and the extended portion 42 are stacked on each other is subjected to the heat treatment in the heat treatment step, the second electrode 52 is stacked on the first electrode 51. This makes it possible to reduce an effect of the heat treatment on the second electrode 52.

Bridge Circuit Adjusting Step

Next, in the bridge circuit adjusting step, a resistance of the bridge circuit configured by the strain detecting element 3 and the electric conductor 4 formed in the pattern printing step is adjusted. Specifically, the resistance adjuster 43 configured to adjust a resistance of the electric conductor 4 is provided, while measuring a resistance balance of the bridge circuit, in the coupling portion 41 disposed at a position corresponding to the second region 212. More specifically, the resistance adjuster 43 is formed by forming the groove(s) 431 by laser trimming in each of: the coupling portion 41 disposed between the second strain detecting element 32 and the third strain detecting element 33; and the coupling portion 41 disposed between the fourth strain detecting element 34 and the first strain detecting element 31. The resistance adjuster 43 configured to adjust the resistance of the electric conductor 4 is thus provided while the resistance balance of the bridge circuit is measured, which makes it possible to reliably adjust a balance of the bridge circuit. In addition, since the groove(s) 431 is formed by the laser trimming, the balance of the bridge circuit is easily adjustable.

Protection Film Stacking Step

Lastly, a silicon oxide film or a silicon nitride film is formed to cover substantially the entire surface of the diaphragm 2 except for a portion of the electrode 5 to form the protection film 6.

Note that in protection film stacking step, the surface of the diaphragm body 21 may be coated with insulating glass. In addition, the protection film stacking step may be performed prior to the bridge circuit adjusting step.

Regarding First Region 211 and Second Region 212

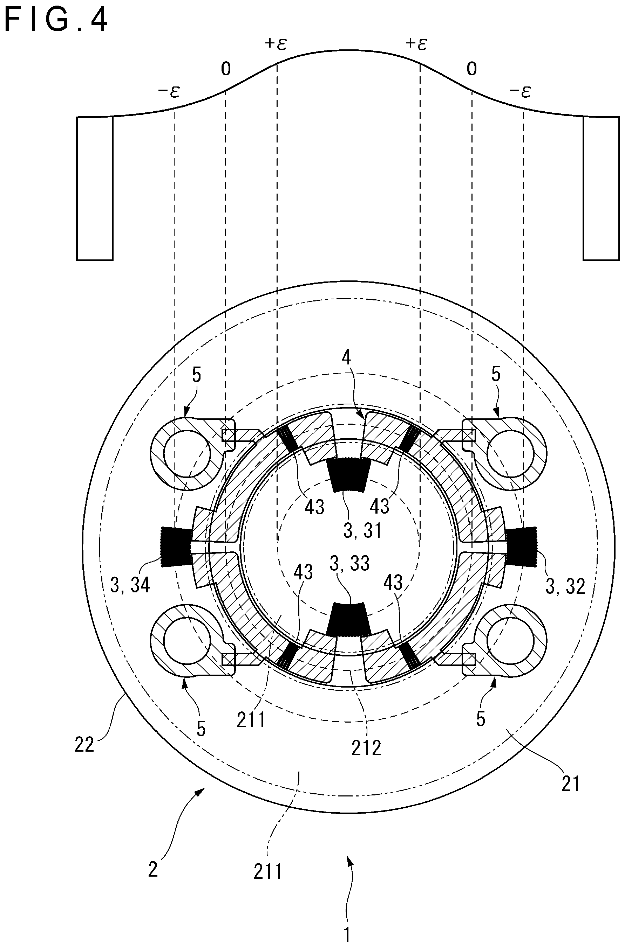

Fig. 4 illustrates displacement of the diaphragm 2. Specifically, Fig. 4 illustrates a relationship between the displacement of the diaphragm 2 and positions of the strain detecting elements 3 and the resistance adjusters 43.

As illustrated in Fig. 4, when being subjected to pressure from the measurement target fluid, the diaphragm body 21 of the diaphragm 2 is displaced, that is, a strain $\varepsilon$ increases. On this occasion, the diaphragm body 21 undergoes largest tensile strain in the center portion thereof. In the diaphragm body 21, an effect of the strain $\varepsilon$ gradually decreases from the center portion toward the peripheral portion. In the diaphragm body 21, the strain $\varepsilon$ reaches zero at an intermediate point between the center portion and the peripheral portion. The diaphragm body 21 gradually undergoes compression strain from the intermediate point toward the peripheral portion.

Here, in the exemplary embodiment, the first region 211 of the diaphragm body 21 is regarded as a location where the effect of the strain $\varepsilon$ caused by the measurement target fluid is large, and the second region 212 is regarded as a location where the effect of the strain $\varepsilon$ caused by the measurement target fluid is small. Specifically, the second region 212 is regarded as an area that includes a position where the strain $\varepsilon$ that occurs by an effect of the physical quantity caused by the measurement target fluid is zero, and in which the effect of the strain $\varepsilon$ is less than or equal to one tenth of the effect at the location in the first region 211 where the effect of the strain $\varepsilon$ is a maximum. That is, assuming that the maximum of the effect of the strain $\varepsilon$ is set to 100, the second region 212 is an area where the effect of the strain $\varepsilon$ is less than or equal to 10.

In the exemplary embodiment, the resistance adjusters 43 are provided in such a second region 212. Thus, it is possible to effectively utilize all the strain detecting elements 3 for the detection of the physical quantity, and to dispose the resistance adjuster 43 without affecting the detection accuracy of the physical quantity of the strain detecting elements 3. Therefore, a decrease in detection accuracy can be inhibited and the balance of the bridge circuit can be adjusted.

In the first exemplary embodiment described above, the following advantages are achievable.

(1) In the exemplary embodiment, at least a portion of the electric conductor 4 that electrically couples the multiple strain detecting elements 3 to each other is disposed in the second region 212 having a smaller effect caused by the measurement target fluid than the first region 211 where the strain detecting elements 3 are disposed. Specifically, at least a portion of the electric conductor 4 is disposed in the second region 212 including the position at which the strain $\varepsilon$ that occurs by the effect of the physical quantity caused by the measurement target fluid is zero. The electric conductor 4 includes the resistance adjuster 43 that adjusts the resistance of the electric conductor 4 at the position corresponding to the second region 212. This makes it possible to effectively utilize all the strain detecting elements 3 for the detection of the physical quantity, and adjust the resistance of the bridge circuit including the multiple strain detecting elements 3 and the electric conductor 4 without affecting the detection accuracy of the physical quantity of the strain detecting elements 3. Therefore, a decrease in detection accuracy can be inhibited and the balance of the bridge circuit can be adjusted.

(2) In the exemplary embodiment, the strain detecting elements 3 and the electric conductor 4 are provided integrally, which makes it possible to form the strain detecting elements 3 and the electric conductor 4 in one step in manufacturing the sensor module 1. It is therefore possible to simplify a process of manufacturing the sensor module 1. In addition, the strain detecting elements 3 and the electric conductor 4 are provided to have the ring shape, which makes it possible to increase a length over which it is possible to dispose the electric conductor 4 on the position where the strain $\varepsilon$ that occurs by the effect of the physical quantity caused by the measurement target fluid is zero.

It is therefore possible to increase an area in which the resistance adjuster 43 is providable, which makes it possible to increase an amount of resistance adjustment to be performed by the resistance adjuster 43.

(3) In the exemplary embodiment, the effect of the strain ε caused by the measurement target fluid in the second region 212 in which the resistance adjuster 43 is provided is less than or equal to one tenth of the effect in the first region 211 in which the strain detecting elements 3 are disposed. This makes it possible to dispose the resistance adjuster 43 without affecting the detection accuracy of the physical quantity of the strain detecting elements 3. Therefore, a decrease in detection accuracy can be inhibited and the balance of the bridge circuit can be adjusted.

(4) In the exemplary embodiment, the resistance adjuster 43 includes the groove(s) 431, which makes it possible to adjust the balance of the bridge circuit with a simple configuration.

(5) In the exemplary embodiment, the first electrode 51 of the electrode 5 is stacked on the extended portion 42 extended from the coupling portion 41 of the electric conductor 4. The diffusion portion 7 is provided at at least a portion in the depth direction of the location where the first electrode 51 and the extended portion 42 are stacked on each other. The diffusion portion 7 has, in atomic percentage, greater than 60% of Au and greater than 10% of Cr. This makes it possible to stabilize the coupling between the electric conductor 4 and the electrode 5. It is therefore possible to stabilize characteristics of a signal to be outputted through the electrode 5.

(6) In the exemplary embodiment, the thickness of the first electrode 51 is greater than the thickness of the extended portion 42. This makes it possible to prevent the extended portion 42 from being exposed at the stepped portion 511 generated in the first electrode 51 between a location stacked on the extended portion 42 and a location not stacked on the extended portion 42.

(7) In the exemplary embodiment, the electrode pad 8 and the extended portion 42 are separated from each other, which makes it possible to reduce an effect of the diffusion portion 7 on the electrode pad 8. It is therefore possible to reliably couple the electrode pad 8 and a wiring or the like to each other.

(8) In the exemplary embodiment, the diaphragm body 21 is formed from precipitation hardening stainless steel having a Rockwell hardness of greater than or equal to 35, which makes it possible to improve physical and chemical properties of the diaphragm body 21.

(9) In the exemplary embodiment, in the bridge circuit adjusting step, the resistance adjuster 43 configured to adjust the resistance of the electric conductor 4 is provided while the resistance balance of the bridge circuit is measured, which makes it possible to reliably adjust the balance of the bridge circuit.

(10) In the exemplary embodiment, in the bridge circuit adjusting step, the groove(s) 431 is formed by the laser trimming, which makes it possible to easily adjust the balance of the bridge circuit.

(11) In the exemplary embodiment, the location where the first electrode 51 is stacked on the extended portion 42 is subjected to the heat treatment, following which the second electrode 52 is stacked on the first electrode 51. This makes it possible to reduce an effect of the heat treatment on the second electrode 52.

Second Exemplary Embodiment

A second exemplary embodiment of the invention will be described with reference to the drawings.

The second exemplary embodiment differs from the first exemplary embodiment in that a thickness of a second electrode 52A is greater than a thickness of an extended portion 42A. In the second exemplary embodiment, the same or similar components as those of the first exemplary embodiment are denoted by the same codes, and the explanation thereof is omitted.

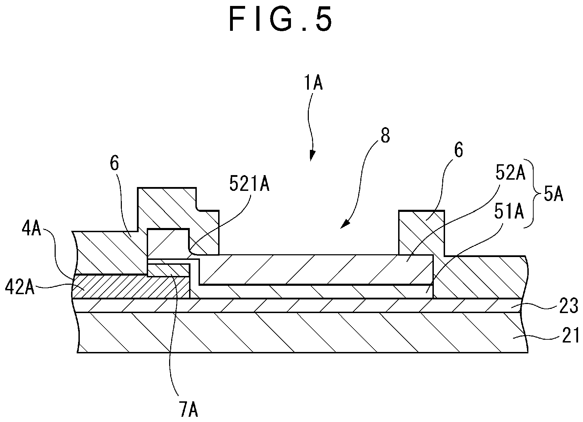

Fig. 5 is a cross-sectional view of a coupled state between an electric conductor 4A and an electrode 5A of a sensor module 1A of the second exemplary embodiment.

As illustrated in Fig. 5, in the exemplary embodiment, a first electrode 51A is disposed on the insulating layer 23 of the diaphragm 2 as with the first exemplary embodiment described above. The second electrode 52A is stacked on the first electrode 51A.

Further, as with the first exemplary embodiment described above, an end of the first electrode 51A is partially stacked on the extended portion 42A of the electric conductor 4A, and a diffusion portion 7A is provided at at least a portion in a depth direction of a location where the first electrode 51A and the extended portion 42A are stacked on each other.

In the exemplary embodiment, the first electrode 51A is configured to have a thickness smaller than that of the extended portion 42A, and the second electrode 52A is configured to have a thickness larger than that of the extended portion 42A. It is thus possible to decrease the thickness of the first electrode 51A, which makes it possible to decrease a material for the first electrode 51A.

In the exemplary embodiment, as with the first exemplary embodiment described above, the diffusion portion 7A is formed as an alloy of Au and Cr, Au being a main component of the first electrode 51A, Cr being a main component of the extended portion 42A. Specifically, the diffusion portion 7A has, in atomic percentage, greater than 60% of Au and greater than 10% of Cr. This makes it possible to stabilize the coupling between the extended portion 42A and the first electrode 51A. It is therefore possible to stabilize characteristics of a signal to be outputted through the electrode 5A.

Further, in the exemplary embodiment, the second electrode 52A is configured to have a thickness larger than that of the extended portion 42A. This makes it possible to prevent the extended portion 42A from being exposed at a stepped portion 521A generated in the second electrode 52A between a location stacked on the extended portion 42A and a location not stacked on the extended portion 42A.

In the second exemplary embodiment described above, the following advantages are achievable.

(12) In the exemplary embodiment, the thickness of the second electrode 52A is greater than the thickness of the extended portion 42A. It is thus possible to decrease the thickness of the first electrode 51A, which makes it possible to decrease a material for the first electrode 51A.

Third Exemplary Embodiment

A third exemplary embodiment of the invention will be described with reference to the drawings.

The third exemplary embodiment differs from the first and second exemplary embodiments in that an extended portion 42B and a third electrode 53B are coupled to each other. In the third exemplary embodiment, the same or similar components as those of the first and second exemplary embodiments are denoted by the same codes, and the explanation thereof is omitted.

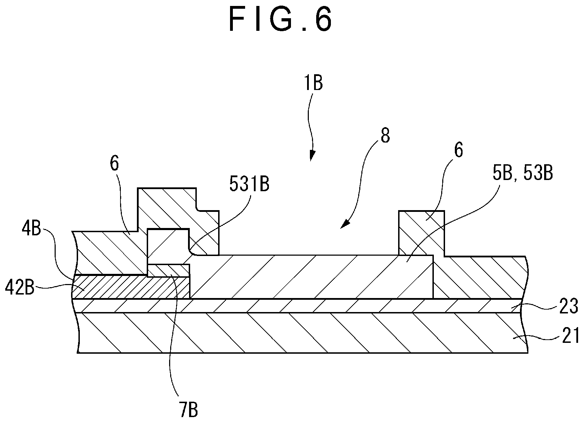

Fig. 6 is a cross-sectional view of a coupled state between an electric conductor 4B and an electrode 5B of a sensor module 1B of the third exemplary embodiment.

As illustrated in Fig. 6, in the exemplary embodiment, the third electrode 53B is disposed on the insulating layer 23 of the diaphragm 2. That is, in the exemplary embodiment, the electrode 5B includes a third electrode 53B that is a single layer.

In the exemplary embodiment, an end of the third electrode 53B is partially stacked on the extended portion 42B of the electric conductor 4B. In the exemplary embodiment, the third electrode 53B and the extended portion 42B are coupled to each other by a heat treatment. Thus, a diffusion portion 7B is provided at at least a portion in a depth direction of a location where the third electrode 53B and the extended portion 42B are stacked on each other, with the third electrode 53B and the extended portion 42B being fused with each other.

In the exemplary embodiment, as with the first and second exemplary embodiments described above, the diffusion portion 7B is formed as an alloy of Au and Cr, Au being a main component of the third electrode 53B, Cr being a main component of the extended portion 42B. Specifically, the diffusion portion 7B has, in atomic percentage, greater than 60% of Au and greater than 10% of Cr. This makes it possible to stabilize the coupling between the extended portion 42B and the third electrode 53B. It is therefore possible to stabilize characteristics of a signal to be outputted through the electrode 5B.

Further, in the exemplary embodiment, the third electrode 53B is configured to have a thickness larger than that of the extended portion 42B. This makes it possible to prevent the extended portion 42B from being exposed at a stepped portion 531B generated in the third electrode 53B between a location stacked on the extended portion 42B and a location not stacked on the extended portion 42B.

In the third exemplary embodiment described above, the following advantages are achievable.

(13) In the exemplary embodiment, the third electrode 53B of the electrode 5B is stacked on the extended portion 42B of the electric conductor 4B. The diffusion portion 7B is provided at at least a portion in the depth direction of the location where the third electrode 53B and the extended portion 42B are stacked on each other. The diffusion portion has, in atomic percentage, greater than 60% of Au and greater than 10% of Cr. This makes it possible to stabilize the coupling between the electric conductor 4B and the electrode 5B. It is therefore possible to stabilize characteristics of a signal to be outputted through the electrode 5B.

(14) In the exemplary embodiment, the thickness of the third electrode 53B is greater than the thickness of the extended portion 42B. This makes it possible to prevent the extended portion 42B from being exposed at a stepped portion 531B generated in the third electrode 53B between a location stacked on the extended portion 42B and a location not stacked on the extended portion 42B.

Fourth Exemplary Embodiment

A fourth exemplary embodiment of the invention will be described with reference to the drawings.

The fourth exemplary embodiment differs from the first to third exemplary embodiments in that an electric conductor 4C includes a bypass 44C. The bypass 44C causes at least one resistance adjuster 43C out of multiple resistance adjusters 43C to be electrically bypassed by coupling a primary side and a secondary side, in terms of a direction of an electric current, of the at least one resistance adjuster 43C to each other. In the fourth exemplary embodiment, the same or similar components as those of the first to third exemplary embodiments are denoted by the same codes, and the explanation thereof is omitted.

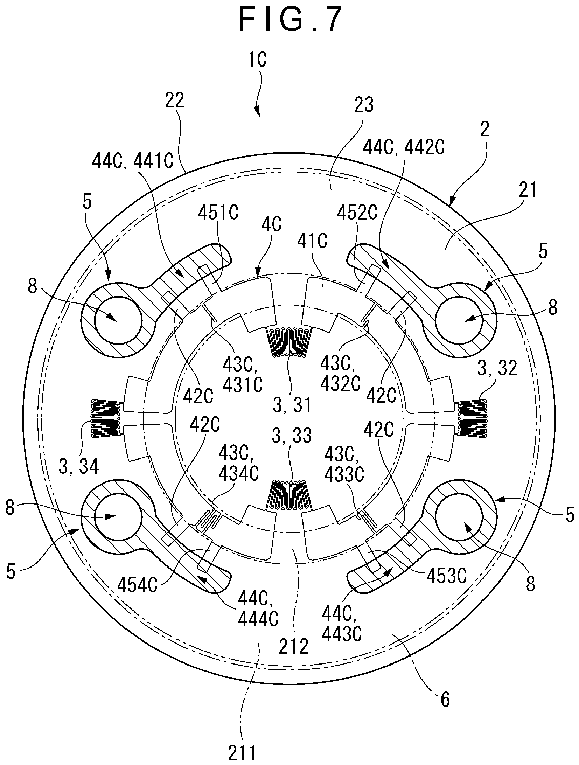

Fig. 7 is a plan view of an outline of a sensor module 1C of the fourth exemplary embodiment.
As illustrated in Fig. 7, the sensor module 1C includes the diaphragm 2, the strain detecting element 3, the electric conductor 4C, the electrode 5, the protection film 6, and the electrode pad 8.

Electric Conductor 4C

As with the electric conductors 4, 4A, and 4B of the first to third exemplary embodiments described above, the electric conductor 4C is provided integrally with the strain detecting elements 3 and electrically couples the strain detecting elements 3 to each other. In the exemplary embodiment, the electric conductor 4C includes a coupling portion 41C, an extended portion 42C, the resistance adjuster 43C, and the bypass 44C. The extended portion 42C is included in a portion of the bypass 44C.
As with the first to third exemplary embodiments described above, the resistance adjuster 43C includes a groove provided at a position corresponding to the second region 212 in the coupling portion 41C of the electric conductor 4C. In the exemplary embodiment, the resistance adjuster 43C includes a first resistance adjuster 431C, a second resistance adjuster 432C, a third resistance adjuster 433C, and a fourth resistance adjuster 434C that differ in resistance when energized. In the first resistance adjuster 431C, the second resistance adjuster 432C, the third resistance adjuster 433C, and the fourth resistance adjuster 434C, the resistance when energized is larger as the number of grooves provided therein is larger. Accordingly, respective correction amounts when the first resistance adjuster 431C, the second resistance adjuster 432C, the third resistance adjuster 433C, and the fourth resistance adjuster 434C are energized are, for example, 10 mV, 20 mV, 40 mV, and 80 mV, respectively.
In this case, when only the first resistance adjuster 431C is energized, the correction amount is 10 mV, and when the first resistance adjuster 431C and the second resistance adjuster 432C are energized, the correction amount is 30 mV (10 mV + 20 mV). Further, when the first resistance adjuster 431C, the second resistance adjuster 432C, and the third resistance adjuster 433C are energized, the correction amount is 70 mV (10 mV + 20 mV + 40 mV), and when the first resistance adjuster 431C, the second resistance adjuster 432C, the third resistance adjuster 433C, and the fourth resistance adjuster 434C are energized, the correction amount is 150 mV (10 mV + 20 mV + 40 mV + 80 mV). That is, correction using 15 patterns of correction amounts can be performed based on combinations of the resistance adjusters 43C to be energized in the exemplary embodiment.
The correction using the resistance adjusters 431C, 432C, 433C, and 434C is not limited to a voltage value on a positive side, and may be, for example, a voltage value on a negative side.
The bypass 44C is configured to cause the resistance adjuster 43C to be electrically bypassed by coupling a primary side and a secondary side, in terms of a direction of an electric current, of the resistance adjuster 43C to each other. In the exemplary embodiment, the bypass 44C includes a first bypass 441C, a second bypass 442C, a third bypass 443C, and a fourth bypass 444C.
The first bypass 441C includes a first bypass extended portion 451C, the extended portion 42C, and a portion of the electrode 5 (specifically, a part of the electrode 5 between the first bypass extended portion 451C and the extended portion 42C), and is configured to couple a primary side and a secondary side, in terms of a direction of an electric current, of the first resistance adjuster 431C to each other. The second bypass 442C includes a second bypass extended portion 452C, the extended portion 42C, and a portion of the electrode 5 (specifically, a part of the electrode 5 between the second bypass extended portion 452C and the extended portion 42C), and is configured to couple a primary side and a secondary side, in terms of a direction of an electric current, of the second resistance adjuster 432C to each other. The third bypass 443C includes a third bypass extended portion 453C, the extended portion 42C, and a portion of the electrode 5 (specifically, a part of the electrode 5 between the third bypass extended portion 453C and the extended portion 42C), and is configured to couple a primary side and a secondary side, in terms of a direction of an electric current, of the third resistance adjuster 433C to each other. The fourth bypass 444C includes a fourth bypass extended portion 454C, the extended portion 42C, and a portion of the electrode 5 (specifically, a part of the electrode 5 between the fourth bypass extended portion 454C and the extended portion 42C), and is configured to couple a primary side and a secondary side, in terms of a direction of an electric current, of the fourth resistance adjuster 434C to each other.

Method of Manufacturing Sensor Module 1C

Next, a method of manufacturing the sensor module 1C will be described.
The method of manufacturing the sensor module 1C of the exemplary embodiment includes an insulating layer forming step, a pattern forming step, a first electrode stacking step, a heat treatment step, a second electrode stacking step, a bridge circuit adjusting step, and a protection film stacking step. Note that the insulating layer forming step, the first electrode stacking step, the heat treatment step, the second electrode stacking step, and the protection film stacking step are similar to those in the first exemplary embodiment described above, and the explanation thereof is omitted.

Pattern Forming Step

In the pattern forming step of the exemplary embodiment, a pattern of a thin film alloy represented by the following formula: Cr100-x-yAlxBy (where x and y each represent an atomic percentage, and satisfy 2 < x < 10 and 1 ≤ y ≤ 10) is formed on a surface of the insulating layer 23 formed in the insulating layer stacking step to thereby form the strain detecting element 3 and the electric conductor 4C. In this case, in the exemplary embodiment, multiple resistance adjusters 43C and the bypass 44C are formed after the electric conductor 4C is formed. That is, the pattern forming step corresponds to an example of forming a resistance adjuster and forming a bypass of the invention.

Bridge Circuit Adjusting Step

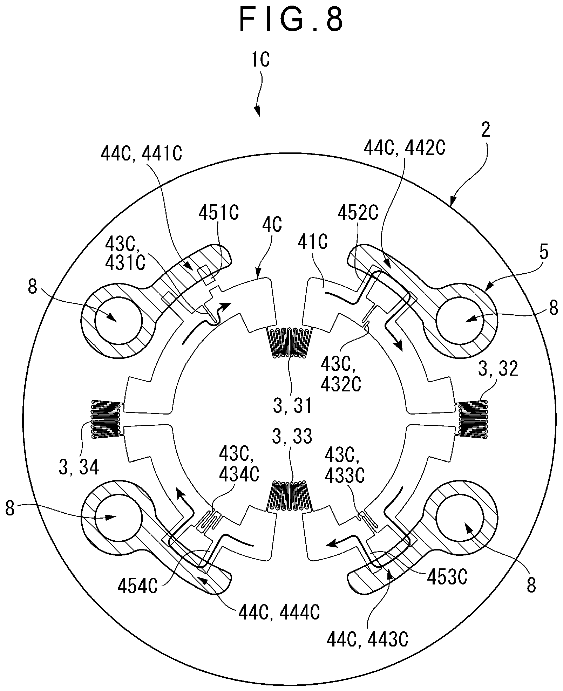

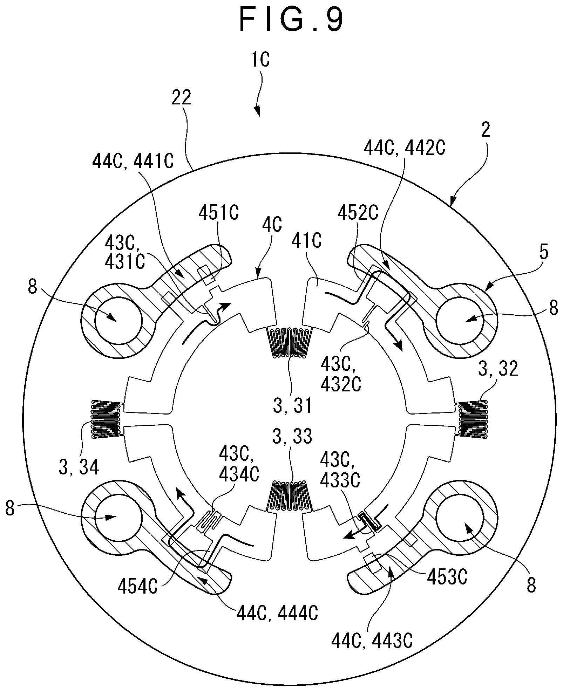

Figs. 8 and 9 each illustrate the bridge circuit adjusting step of the exemplary embodiment.
As illustrated in Fig. 8, in the bridge circuit adjusting step, for example, the first bypass 441C is electrically decoupled. Specifically, the first bypass extended portion 451C of the first bypass 441C is decoupled by laser trimming. This causes the first bypass 441C to be unenergized and the first resistance adjuster 431C to be energized. It is therefore possible to adjust a resistance of the electric conductor 4C by the first resistance adjuster 431C.
In contrast, the second resistance adjuster 432C, the third resistance adjuster 433C, and the fourth resistance adjuster 434C are respectively bypassed by the second bypass 442C, the third bypass 443C, and the fourth bypass 444C, and thus no resistance adjustment is performed. Accordingly, in a state illustrated in Fig. 8, it is only performed the correction on the resistance of the bridge circuit by the first resistance adjuster 431C, e.g., correction of 10 mV.
When the first bypass 441C is to be electrically decoupled, for example, the extended portion 42C or the electrode 5 included in the first bypass 441C may be decoupled by laser trimming, etc.
When balance adjustment of the resistance of the bridge circuit is not sufficient by the correction performed by the first resistance adjuster 431C, for example, the third bypass extended portion 453C of the third bypass 443C is electrically decoupled as illustrated in Fig. 9. This causes the third bypass 443C to be unenergized and the third resistance adjuster 433C to be energized. It is therefore possible to adjust a resistance of the electric conductor 4C by the third resistance adjuster 433C. That is, in a state illustrated in Fig. 9, it is performed the correction on the resistance of the bridge circuit by the first resistance adjuster 431C and the third resistance adjuster 433C, e.g., correction of 50 mV (10 mV + 40 mV).
As described above, in the exemplary embodiment, it is possible to obtain a desired correction amount by electrically decoupling, on an as-needed basis, at least one bypass 44C out of the multiple bypasses 44C by laser trimming or the like. This facilitates the adjustment of the resistance of the bridge circuit.
Further, even if a crack or the like progresses at a location of the extended portion 42C decoupled by laser trimming or the like, the bypass 44C has already been decoupled and no effect is exerted on the resistance of the bridge circuit. It is therefore possible to prevent a change in output voltage that may otherwise be caused by the crack generated at the decoupled location.
When the third bypass 443C is to be electrically decoupled, for example, the extended portion 42C or the electrode 5 included in the third bypass 443C may be decoupled by laser trimming, etc.
The bridge circuit adjusting step will be described in further detail.

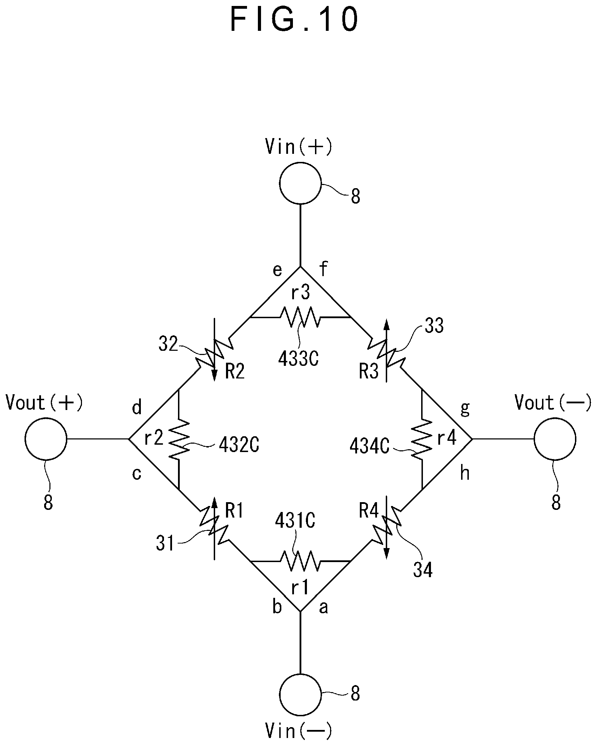

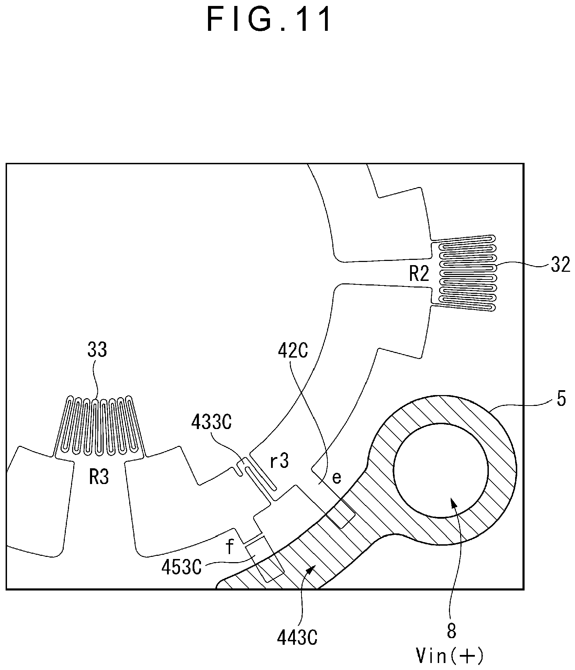

Fig. 10 is a circuit diagram of the bridge circuit of the sensor module 1C of the exemplary embodiment. Figs. 11 to 14 each illustrate the bridge circuit adjusting step.
As illustrated in Fig. 10, in the following description, resistances of the first to fourth strain detecting elements 31 to 34 are respectively represented by R1 to R4, and resistances of the first to fourth resistance adjusters 431C to 434C are respectively represented by r1 to r4. Input/output voltages are set as follows: the electrode pad 8 coupled to the first strain detecting element 31 and the second strain detecting element 32 is Vout (+); the electrode pad 8 coupled to the second strain detecting element 32 and the third strain detecting element 33 is Vin (+); the electrode pad 8 coupled to the third strain detecting element 33 and the fourth strain detecting element 34 is Vout (-); and the electrode pad 8 coupled to the fourth strain detecting element 34 and the first strain detecting element 31 is Vin (-). In this case, Vout is expressed by Equation (1) below in paths "a" to "h" illustrated in Fig. 10.

[Math. 1]

$$ Vout = \left( \frac{R1}{R1 + R2} - \frac{R4}{R3 + R4} \right) \times Vin \qquad \text{...Equation (1)} $$

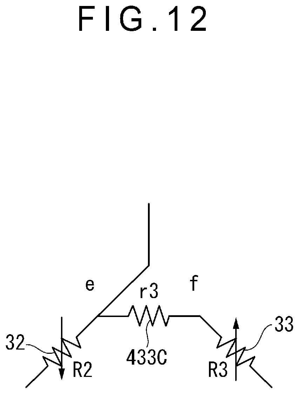

Here, as illustrated in Fig. 11, when the third bypass extended portion 453C constituting the path f is decoupled, the electric current flows through a path as illustrated in Fig. 12. In this case, the resistance of the third resistance adjuster 433C is added to the third strain detecting element 33. The resistance of the path is thus R3+r3. Vout' in such a case is expressed by Equation (2) below.
[Math. 2]

$$\text{Vout}' = \left( \frac{R1}{R1 + R2} - \frac{R4}{R3 + r3 + R4} \right) \times \text{Vin} \quad \ldots \text{Equation (2)}$$

In this case, since Vout' of Equation (2) is larger than Vout of Equation (1), correction on the positive side can be performed.

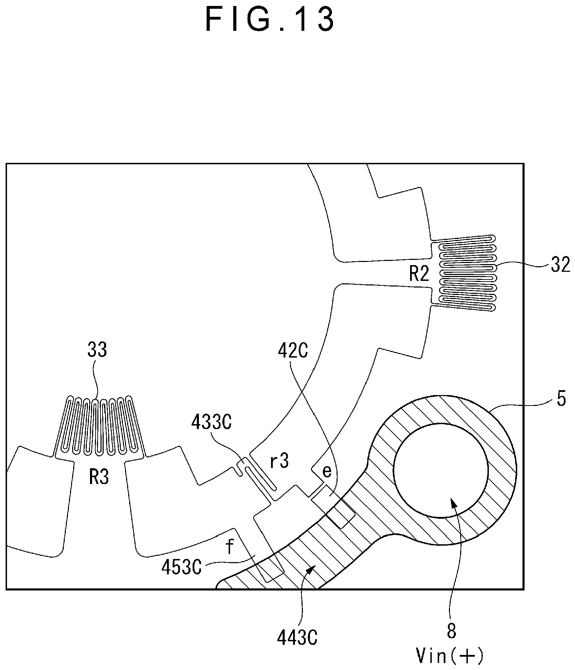

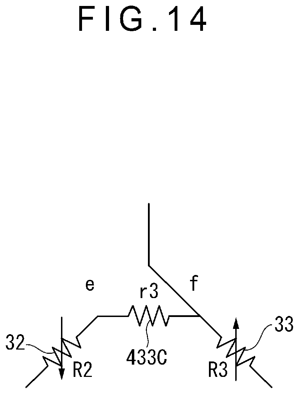

As illustrated in Fig. 13, when the extended portion 42C constituting the path e is decoupled, the electric current flows through a path as illustrated in Fig. 14. In this case, the resistance of the third resistance adjuster 433C is added to the second strain detecting element 32. The resistance of the path is thus R2+r3. Vout" in such a case is expressed by Equation (3) below.
[Math. 3]

$$\text{Vout}'' = \left( \frac{R1}{R1 + R2 + r3} - \frac{R4}{R3 + R4} \right) \times \text{Vin} \quad \ldots \text{Equation (3)}$$

In this case, since Vout" of Equation (3) is smaller than Vout of Equation (1), correction on the negative side can be performed.

As described above, in the exemplary embodiment, it is possible to perform the correction on the positive side or on the negative side by decoupling any of the first to fourth bypass extended portions 451C to 454C and the extended portion 42C in the bypass 44C.

In the fourth exemplary embodiment described above, the following advantages are achievable.

(15) In the exemplary embodiment, the primary side and the secondary side, in terms of a direction of an electric current, of at least one resistance adjuster 43C out of the multiple resistance adjusters 43C are coupled to each other, thereby providing the bypass 44C that causes the at least one resistance adjuster 43C to be electrically bypassed. This makes it possible to adjust the resistance of the bridge circuit by electrically decoupling the bypass 44C. It is therefore possible to facilitate the adjustment of the resistance of the bridge circuit.

Modifications

It should be noted that the invention is not limited to the above-described exemplary embodiments but includes modifications, improvements, and the like as long as an object of the invention can be achieved.

In each of the above exemplary embodiments, the effect of the strain $\varepsilon$ caused by the measurement target fluid in the second region 212 is less than or equal to one tenth of the effect in the first region 211, but the invention is not limited thereto. For example, the effect of the strain caused by the measurement target fluid in the second region may be less than or equal to one fifth of the effect in the first region, and it is only required that the effect of the strain caused by the measurement target fluid in the second region be smaller than the effect in the first region.

In each of the above exemplary embodiments, the resistance adjuster 43 or 43C includes the groove(s) 431 provided at a position corresponding the second region 212, but the invention is not limited thereto. For example, the resistance adjuster may include a notch provided in the coupling portion, and it is only necessary for the notch to have a shape that can adjust the resistance of the electric conductor.

Further, in each of the above exemplary embodiments, four resistance adjusters 43 or 43C are provided in the coupling portions 41 or 41C, but the invention is not limited thereto. For example, the number of resistance adjusters provided in the coupling portions may be three or less. Further, five or more resistance adjustments may be provided in the coupling portions to achieve finer correction.

In each of the above exemplary embodiments, the diaphragm body 21 is formed from precipitation hardening stainless steel, but the invention is not limited thereto. For example, the diaphragm body may be formed from stainless steel such as SUS304 or SUS316, or may be formed from a material such as ceramics.

In each of the above exemplary embodiments, the strain detecting element 3 and the electric conductor 4, 4A, 4B, or 4C are formed from a thin film alloy represented by the following formula: $Cr_{100-x-y}Al_xB_y$ (where x and y each represent an atomic percentage, and satisfy $2 < x < 10$ and $1 \le y \le 10$), but the invention is not limited thereto. For example, the strain detecting element and the electric conductor may be formed from a common thin film alloy, and the composition of the material included in the strain detecting element and the electric conductor is not particularly limited as long as it is electrically conductive.

In each of the above exemplary embodiments, the protection film 6 is stacked in a circular shape to cover substantially the entire surface of the diaphragm 2 except for a portion of the electrode 5, but the invention is not limited thereto. For example, the protection film may be stacked on a location corresponding to the strain detecting element or the electric conductor, and it is only necessary for the protection film to be stacked to cover the strain detecting element and the electric conductor. Further, the invention includes a case where no protection film is provided.

In each of the first to third exemplary embodiments, the strain detecting element 3 and the electric conductor 4, 4A, or 4B are simultaneously formed in the pattern forming step, but the invention is not limited thereto. For example, the strain detecting element and the electric conductor may be formed separately.

Further, in the fourth exemplary embodiment, the strain detecting element 3, the resistance adjuster 43C, and the bypass 44C are simultaneously formed in the pattern forming step, but the present invention is not limited thereto. For example, the strain detecting element, the resistance adjuster, and bypass may be formed separately.

In the fourth exemplary embodiment, the first resistance adjuster 431C, the second resistance adjuster 432C, the third resistance adjuster 433C, and the fourth resistance adjuster 434C are configured to have different resistances, but the invention is not limited thereto. For example: the first resistance adjuster, the second resistance adjuster, the third resistance adjuster, and the fourth resistance adjuster may be configured to have the same resistance; two of them may be configured to have the same resistance; or three of them may be configured to have the same resistance. Further, the respective amounts of correction performed by first resistance adjuster, the second resistance adjuster, the third resistance adjuster, and the fourth resistance adjuster may be freely set by taking into consideration an input voltage, an output voltage, or the like.

In each of the above exemplary embodiments, the sensor module 1, 1A, or 1B is configured to detect the pressure of the measurement target fluid, but the invention is not limited thereto. For example, the sensor module of the invention may be configured to detect a physical quantity such as a differential pressure or a temperature.

EXPLANATION OF CODES

1, 1A, 1B, 1C...sensor module, 2...diaphragm, 3...strain detecting element, 4, 4A, 4B, 4C...electric conductor, 5, 5A, 5B... electrode, 6... protection film, 7, 7A, 7B... diffusion portion, 8... electrode pad, 21 ... diaphragm body, 22... cylindrical portion, 23... insulating layer, 31...first strain detecting element, 32... second strain detecting element, 33...third strain detecting element, 34... fourth strain detecting element, 41, 41C...coupling portion, 42, 42A, 42B, 42C...extended portion, 43, 43C...resistance adjuster, 44C...bypass, 51, 51A...first electrode, 52, 52A...second electrode, 53B...third electrode, 211...first region, 212...second region, 431...groove, 431C...first resistance adjuster, 432C... second resistance adjuster, 433C...third resistance adjuster, 434C...fourth resistance adjuster, 441C...first bypass, 442C...second bypass, 443C...third bypass, 444C...fourth bypass, 451C...first bypass extended portion, 452C... second bypass extended portion, 453C... third bypass extended portion, 454C...fourth bypass extended portion, 511...stepped portion, 521A... stepped portion, 531B... stepped portion.

**Claims**

1. A sensor module, comprising:

   a diaphragm including a first region and a second region, the second region including a position at which a strain that occurs by an effect of a physical quantity caused by a measurement target fluid is zero and having a smaller effect of the physical quantity caused by the measurement target fluid than the first region;
   a plurality of strain detecting elements disposed in the first region; and
   an electric conductor that is at least partially disposed in the second region and electrically couples the plurality of strain detecting elements to each other to configure a bridge circuit, wherein
   the electric conductor comprises a resistance adjuster at a position corresponding to the second region, the resistance adjuster being configured to adjust a resistance of the electric conductor.

2. The sensor module according to claim 1, wherein the strain detecting elements and the electric conductor are provided integrally, the strain detecting elements and the electric conductor being provided to have a ring shape.

3. The sensor module according to claim 1 or 2, wherein the effect of the strain caused by the measurement target fluid in the second region is less than or equal to one tenth of the effect in the first region.

4. The sensor module according to any one of claims 1 to 3, wherein the resistance adjuster comprises a groove provided at a position corresponding to the second region in the electric conductor.

5. The sensor module according to any one of claims 1 to 4, further comprising

an electrode comprising a first electrode and a second electrode, the first electrode being disposed on the diaphragm and formed from Au, the second electrode being stacked on the first electrode and formed from Au, wherein
the electric conductor comprises a coupling portion and an extended portion, the coupling portion electrically coupling the plurality of strain detecting elements to each other, the extended portion being extended from the coupling portion and electrically coupling the coupling portion and the first electrode to each other,
at least a portion of the first electrode is stacked on the extended portion, and
a diffusion portion is provided at at least a portion in a depth direction of a location where the first electrode and the extended portion are stacked on each other, the diffusion portion having, in atomic percentage, greater than 60% of Au and greater than 10% of Cr.

6. The sensor module according to claim 5, wherein a thickness of the first electrode is greater than a thickness of the extended portion.

7. The sensor module according to claim 5, wherein a thickness of the second electrode is greater than a thickness of the extended portion.

8. The sensor module according to any one of claims 1 to 4, further comprising

an electrode comprising a third electrode, the third electrode being disposed on the diaphragm and formed from Au, wherein
the electric conductor comprises a coupling portion and an extended portion, the coupling portion electrically coupling the plurality of strain detecting elements to each other, the extended portion being extended from the coupling portion and electrically coupling the coupling portion and the third electrode to each other,
at least a portion of the third electrode is stacked on the extended portion, and
a diffusion portion is provided at at least a portion in a depth direction of a location where the third electrode and the extended portion are stacked on each other, the diffusion portion having, in atomic percentage, greater than 60% of Au and greater than 10% of Cr.

9. The sensor module according to claim 8, wherein a thickness of the third electrode is greater than a thickness of the extended portion.

10. The sensor module according to any one of claims 5 to 9, further comprising

a protection film stacked on a portion of the electrode in a state where a portion of the electrode is exposed, wherein
a location, in the electrode, that is exposed without being covered with the protection film comprises an electrode pad, and
the extended portion and the electrode pad are separated from each other in a plan view.

11. The sensor module according to any one of claims 1 to 10, wherein

the diaphragm comprises a diaphragm body on which the physical quantity caused by the measurement target fluid acts and an insulating layer stacked on the diaphragm body, and
the diaphragm body is formed from precipitation hardening stainless steel having a Rockwell hardness of greater than or equal to 35.

12. The sensor module according to any one of claims 1 to 11, wherein

the resistance adjuster includes a plurality of resistance adjusters, and
the electric conductor comprises the plurality of resistance adjusters and a bypass, the bypass causing at least one of the plurality of resistance adjusters to be electrically bypassed by coupling a primary side and a secondary side of the at least one resistance adjuster to each other.

13. A method of manufacturing a sensor module,

the sensor module comprising: a diaphragm including a first region and a second region, the second region including a position at which a strain that occurs by an effect of a physical quantity caused by a measurement target fluid is zero and having a smaller effect of the physical quantity caused by the measurement target fluid than the first region; a plurality of strain detecting elements disposed in the first region; and an electric conductor that is at least partially disposed in the second region and electrically couples the plurality of strain detecting elements to each other to configure a bridge circuit,
the method comprising:
providing, while measuring a resistance balance of the bridge circuit, a resistance adjuster at a position corresponding to the second region in the electric conductor, the resistance adjuster being configured to adjust a resistance of the electric conductor.

14. The method of manufacturing the sensor module according to claim 13, wherein the providing of the resistance adjuster at the position corresponding to the second region in the electric conductor comprises forming a groove by laser trimming at a position corresponding to the second region in the electric conductor.

15. A method of manufacturing a sensor module,

the sensor module comprising: a diaphragm including a first region and a second region, the second region including a position at which a strain that occurs by an effect of a physical quantity caused by a measurement target fluid is zero and having a smaller effect of the physical quantity caused by the measurement target fluid than the first region; a plurality of strain detecting elements disposed in the first region; and an electric conductor that is at least partially disposed in the second region and electrically couples the plurality of strain detecting elements to each other to configure a bridge circuit,
the method comprising:

providing a plurality of resistance adjusters at respective positions corresponding to the second region in the electric conductor, the plurality of resistance adjusters being configured to adjust a resistance of the electric conductor;
forming a bypass that causes each of the resistance adjusters to be electrically bypassed by coupling a primary side and a secondary side of the each of the resistance adjusters to each other; and
adjusting a resistance of the electric conductor by electrically decoupling at least one of the bypasses.

16. The method of manufacturing the sensor module according to any one of claims 13 to 15, further comprising:

stacking a first electrode on an extended portion extended from a coupling portion of the electric conductor;
subjecting a location where the first electrode is stacked on the extended portion to a heat treatment; and
stacking a second electrode on the first electrode.

# FIG.1

# F I G . 2

# FIG.3

# FIG.4

# FIG.5

# FIG.6

# FIG.7

# F I G . 8

# FIG.9

# FIG.10

# FIG.11

R2

32

33

42C

433C

r3

e

5

R3

f

453C

443C

8

Vin(+)

# F I G . 1 2

# FIG.13

# FIG.14

## INTERNATIONAL SEARCH REPORT

| International application No. |
|---|
| **PCT/JP2022/025323** |

**A.     CLASSIFICATION OF SUBJECT MATTER**

***G01L 9/04***(2006.01)i; *G01L 1/22*(2006.01)n
FI:    G01L9/04; G01L1/22 M

According to International Patent Classification (IPC) or to both national classification and IPC

**B.     FIELDS SEARCHED**

Minimum documentation searched (classification system followed by classification symbols)

G01L1/00-G01L1/26; G01L7/00-G01L27/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| A | JP 2002-373991 A (DENSO CORP) 26 December 2002 (2002-12-26) paragraphs [0046]-[0048], [0112]-[0120], fig. 4, 13 | 1-16 |
| A | US 4322707 A (HOTTINGER BALDWIN MEASUREMENTS, INC.) 30 March 1982 (1982-03-30) column 5, line 25 to column 7, line 67, fig. 2 | 1-16 |
| A | KR 10-2011-0129769 A (DAEYANG ELECTRIC CO., LTD.) 02 December 2011 (2011-12-02) paragraphs [0037]-[0052], fig. 8-12 | 1-16 |
| A | US 2021/0025776 A1 (TDK ELECTRONICS AG) 28 January 2021 (2021-01-28) paragraph [0039], fig. 4 | 1-16 |

☐ Further documents are listed in the continuation of Box C.        ☑ See patent family annex.

| *    Special categories of cited documents: | "T"    later document published after the international filing date or priority date and not in conflict with the application but cited to understand the principle or theory underlying the invention |
|---|---|
| "A"   document defining the general state of the art which is not considered to be of particular relevance | |
| "E"   earlier application or patent but published on or after the international filing date | "X"    document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"    document member of the same patent family |

| Date of the actual completion of the international search | Date of mailing of the international search report |
|---|---|
| **16 August 2022** | **30 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/025323**

| Patent document cited in search report | | | Publication date (day/month/year) | Patent family member(s) | | | Publication date (day/month/year) |
|---|---|---|---|---|---|---|---|
| JP | 2002-373991 | A | 26 December 2002 | US 2002/0100948 A1 paragraphs [0057]-[0059], [0120]-[0126], fig. 4, 13 DE 10203631 A1 FR 2820201 A1 | | | |
| US | 4322707 | A | 30 March 1982 | DE 2916427 A1 | | | |
| KR | 10-2011-0129769 | A | 02 December 2011 | (Family: none) | | | |
| US | 2021/0025776 | A1 | 28 January 2021 | JP 2021-516761 A paragraph [0034], fig. 4 WO 2019/180018 A1 EP 3769062 A1 DE 102018106518 A1 CN 111886486 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9243472 A